# EUROPEAN PATENT APPLICATION

(11) **EP 3 059 863 A1**
(43) Date of publication of application: **24.08.2016**
(21) Application number: 16153476.3
(22) Date of filing: 19.11.2014
(51) Int. Cl.: H03K 19/003, H04L 9/32, H04L 9/08

(54) **PHYSICALLY UNCLONABLE FUNCTION REDUNDANT BITS**

(30) Priority: 26.12.2013 US 201314141226
(62) Divisional of application: 14193952.0
(71) Applicant: Intel Corporation, Santa Clara, CA 95054 (US)
(72) Inventor: KOEBERL, Patrick, 64665 Alsbach-Haenlein (DE); WU, Wei, Portland, OR 97229 (US); LI, Jiangtao, Beaverton, OR 97007 (US)
(74) Representative: Jennings, Vincent Louis

(57) **Abstract**

Embodiments of an invention for using physically unclonable function redundant bits are disclosed. In one embodiment, an integrated circuit includes a PUF cell array and redundancy logic. The PUF cell array includes a plurality of redundant cells and is to provide a raw PUF value. The redundancy logic is to generate a redirection list to be used to replace each of one or more bits of the raw PUF value with a redundant bit value from one of the redundant cells.

## Description

### BACKGROUND

### 1. Field

The present disclosure pertains to the field of electronic devices, and more particularly, to the field of security in electronic devices.

### 2. Description of Related Art

Confidential information is stored, transmitted, and used by many electronic devices. Therefore, many such devices include one or more components having one or more cryptographic or other secret keys, which may be used to protect the security of confidential information with encryption or other techniques. Techniques for generating these keys often include the use of a random number source.

### Brief Description of the Figures

The present invention is illustrated by way of example and not limitation in the accompanying figures.
Figure 1 illustrates an integrated circuit using physically unclonable function redundant bits according to an embodiment of the present invention.
Figure 2 illustrates physically unclonable function redundant bit logic according to an embodiment of the present invention.
Figure 3 illustrates a manufacturing time method of using physically unclonable function redundant bits according to an embodiment of the present invention.
Figure 4 illustrates an evaluation time method of using physically unclonable function redundant bits according to an embodiment of the present invention.

### Detailed Description

Embodiments of an invention providing for physically unclonable function redundant bits are described. In this description, various specific details, such as component and system configurations, may be set forth in order to provide a more thorough understanding of the present invention. It will be appreciated, however, by one skilled in the art, that the invention may be practiced without such specific details. Additionally, to avoid unnecessarily obscuring the present invention, some well-known structures, circuits, and other features have not been shown in detail.

In the following description, references to "one embodiment," "an embodiment," "example embodiment," "various embodiments," etc., indicate that the embodiment(s) of the invention so described may include particular features, structures, or characteristics, but more than one embodiment may and not every embodiment necessarily does include the particular features, structures, or characteristics. Further, some embodiments may have some, all, or none of the features described for other embodiments.

As used in the specification and claims, unless otherwise specified, the use of the ordinal adjectives "first," "second," "third," etc. to describe an element merely indicates that a particular instance of an element or different instances of like elements are being referred to, and is not intended to imply that the elements so described must be in a particular sequence, either temporally, spatially, in ranking, or in any other manner.

Also, the terms "bit," "flag," "field," "entry," "indicator," etc., may be used to describe any type of storage location in a register, table, database, or other data structure, whether implemented in hardware or software, but are not meant to limit embodiments of the invention to any particular type of storage location or number of bits or other elements within any particular storage location. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments of the present invention to any particular logical convention, as any logical convention may be used within embodiments of the present invention.

As mentioned in the background section, the generation of cryptographic keys often includes the use of a random number source. A physically unclonable function (PUF) is a desirable random number source because it may be used to provide a unique, repeatable, and unpredictable random value within an integrated circuit. In this description, the term "PUF key" may be used to mean any value generated by or derived from a PUF.

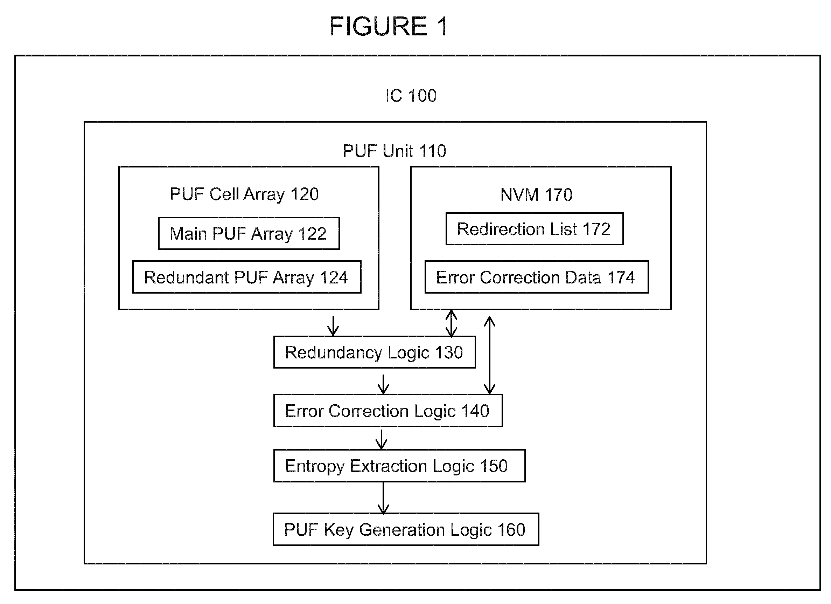

Figure 1 illustrates integrated (IC) 100, which includes PUF redundant bits according to an embodiment of the present invention. IC 100 may represent any other component to be used in any electronic device.

For example, IC 100 may represent one or more processors integrated on a single substrate or packaged within a single package, each of which may include multiple threads and/or multiple execution cores, in any combination. Each processor may be any type of processor, including a general purpose microprocessor, such as a processor in the Intel® Core® Processor Family, Intel® Atom® Processor Family, or other processor family from Intel® Corporation, or another processor from another company, or a special purpose processor or microcontroller.

IC 100 may include PUF unit 110 to generate one or more PUF keys that may be used for any purpose by IC 100, such as for use directly as one or more cryptographic or other keys and/or for use in the generation or derivation of one or more cryptographic or other keys. The PUF key(s) generated by PUF unit 110 may be of any size, i.e., number of bits. PUF unit 110 may include PUF cell array 120, redundancy logic 130, error correction logic 140, entropy extraction logic 150, PUF key generation logic 160, and non-volatile memory (NVM) 170. Embodiments of the present invention may omit error correction logic 140, entropy extraction logic 150, and/or PUF key generation logic 160.

PUF cell array 120 may include any number of PUF cells to provide a unique, repeatable, and unpredictable value. For example, PUF cell array 120 may take advantage of variations in IC process parameters such as dopant concentrations, line widths, and layer thicknesses, which may manifest themselves as differences in timing behavior between multiple instances of the same circuit on different ICs. Therefore, each instance of a PUF cell may provide a unique, repeatable, and unpredictable response when measured or challenged. Furthermore, because manufacturing variations are random in nature, cloning or creating a physical copy of any particular instance of a PUF cell or PUF cell array is extremely difficult.

Any type of PUF cell may be used in PUF cell array 120, including but not limited to an arbiter PUF, a ring oscillator PUF, a static random access memory (SRAM) PUF, and a D-type flip-flop PUF. For example, an SRAM PUF is based on the four-cross coupled transistors of an SRAM cell, which assumes one of two stable states after power-up based on any slight mismatches among the four transistors. The mismatches are the result of variations in the fabrication process, so the power-up state for a single instance of an SRAM cell may be expected to be repeatable, but the distribution of power-up states for multiple instances of an SRAM cell may be expected to be random.

PUF cell array 120 includes main PUF array 122 and redundant PUF array 124. Although shown as two separate parts, main PUF array 122 and redundant PUF array 124 may or may not be physically isolated or separate from each other. In an embodiment, cells of redundant PUF array 124 may be distributed within main PUF array 124, for example, one redundant row or columns for every few main rows or columns, or a few redundant cells in each row or column of main cells.

The size of main PUF array 122 (i.e., number of cells) may be determined based on the size (i.e., number of bits) of the cryptographic and/or other key or keys to be generated or derived. In one embodiment, such a key may be 128 bits; however, main PUF array may include more than 128 cells to provide for implementing any desired error correction and/or entropy extraction algorithms.

The size of redundant PUF array 124 may be proportional to the size of main PUF array 122 and may be determined based on an expected raw PUF cell error rate and/or a desired level of noise reduction. For example, the ratio of redundant PUF cells to main PUF cells may correspond to the raw error rate, plus extra redundant PUF cells to provide a desired margin based on the expected variability in the raw error rate. In this description, a PUF cell from redundant PUF array 122 may be referred to as a redundant bit.

Redundancy logic 130 may include any logic, circuitry, or other hardware and/or firmware to provide for the evaluation of the characteristics of one or more PUF cells in PUF cell array 120, to provide for replacing those PUF cells that are determined to not meet stability requirements in the generation of PUF key(s). PUF cell array 120 may be tested multiple times, under differing voltage and temperature conditions, in order to determine which PUF cells are to be marked as unstable. If the measured bit value ('0' or '1') of a particularly PUF cell is determined to be unstable, noisy, or otherwise not consistent, it may be marked as a bit to be replaced (a "bad bit"), as described below. This testing may be performed by the manufacturer or vendor of IC 100 before sale or release of IC 100 to a system manufacturer, system user, or other customer. However, it is desirable for the testing process to not reveal information that may allow the manufacturer of IC 100 to determine the PUF key(s) to be generated by PUF unit 110 when in use by a customer, for that would compromise the security benefits provided to the customer by the use of the PUF keys. Redundancy logic 130 may provide for the testing of PUF cell array 120 and determination and replacement of bad bits without leaking such information.

Therefore, redundancy logic 130 provides for replacing bad bits in order to reduce the noise in and/or error rate of PUF key generation. Redundancy logic 130 may use NVM 170 to store information, such as a redirection list as described below, to mark (e.g., during an IC or system manufacturer's testing and/or a customer's use of IC 100) and later identify (e.g., during subsequent use of IC 100) and replace bad bits, as further described below.

Error correction logic 140 may include any logic, circuitry, or other hardware and/or firmware to provide for correcting errors in the generation of PUF keys from PUF cell array 120. Any known error correction technique, such as an error correcting code (ECC) may be used. NVM 170 may be used to store information, such as ECC data, gathered during the fabrication and/or testing of IC 100 to be later used by error correction logic 140 to correct errors during the use of IC 100. Embodiments of the present invention may be desired in order to provide for a simpler implementation of error correction logic 140 than might be required according to noise reduction techniques in which bad bits are discarded, because replacement of bad bits allows the PUF response length to be fixed.

Entropy extraction logic 150 may include any logic, circuitry, or other hardware and/or firmware to provide for increasing entropy in the generation of PUF keys from PUF cell array 120. Entropy extraction logic 150 may provide for increasing entropy in order to offset any loss of entropy resulting from the use of error correction logic 140. Any known entropy extraction technique, such as one based on a block cipher, a message authentication code (MAC), a hash function, or an Advanced Encryption Standard (AES) Cipher-based MAC, may be used. Embodiments of the present invention may be desired to provide lower entropy loss than other noise reduction techniques, and therefore a simpler implementation of entropy extraction logic 150 than might be required according to known noise reduction techniques. Entropy loss may be lower because embodiments of the present invention, as described below, provide for only bad bit location information to be released to the tester, without revealing any information directly related to the bad bit value.

PUF key generation logic 160 may include any logic, circuitry, or other hardware to provide for the generation of one or more PUF keys from the content or output of PUF cell array 120, as it may be post-processed by redundancy logic 130, error correction logic 140, and/or entropy extraction logic 150. For example, PUF key generation logic 160 may measure or challenge PUF cell array 120 to produce one or more raw values that may be filtered, conditioned, processed, or otherwise manipulated by redundancy logic 130, error correction logic 140, entropy extraction logic 150, and/or PUF key generation logic 150 to further produce one or more PUF keys in response. PUF key generation logic 160 may also be challenged itself, as part of a challenge-response protocol, in which case PUF key generation logic 160 may respond with one or more PUF keys based on the content or output of PUF cell array 120, as post-processed by redundancy logic 130, error correction logic 140, entropy extraction logic 150, and/or PUF key generation logic 150. In either case, one or more values (i.e., sets of bits) provided in a challenge may be used in the generation and/or post-processing of the raw value(s) from PUF cell array 120.

NVM 170 may include any type of non-volatile memory, such as fuses or programmable read-only memory, which may be used to store information during the fabrication and/or testing of IC 100 for use by redundancy logic 130 and/or error correction logic 140 during the use of IC 100. For example, NVM 170 may include redundancy list NVM 172 and error correction NVM 174. Although shown as included in IC 100, NVM 170 may be separate from IC 100.

Redundancy list NVM 172 may be used to store a list or any other type of data structure including a number of entries, each entry corresponding to one of the PUF cells in redundant PUF array 124. Each entry may include any number of bit locations to store an address, bit number, row number, column number, and/or any other information to identify a particular bit in main PUF array 122 or redundant PUF array 124 that is to be replaced by the redundant PUF cell identified by that entry. The size (i.e., number of bits) of redundancy list NVM 172 is based on the size of redundant PUF array 124.

Error correction NVM 174 may be used to store any ECC syndrome or other data to be used to provide for error correction by error correction logic 140 during the use of IC 100. The size of error correction NVM 174 may be determined based on the size of main PUF array 122, redundant PUF array 124, the cryptographic and/or other key or keys to be generated or derived, and/or a desired or expected error rate limit. By providing for the simplification of error correction logic 140, embodiments of the present invention may also provide for a smaller size of error correction NVM 174 than might be needed according to known noise reduction techniques.

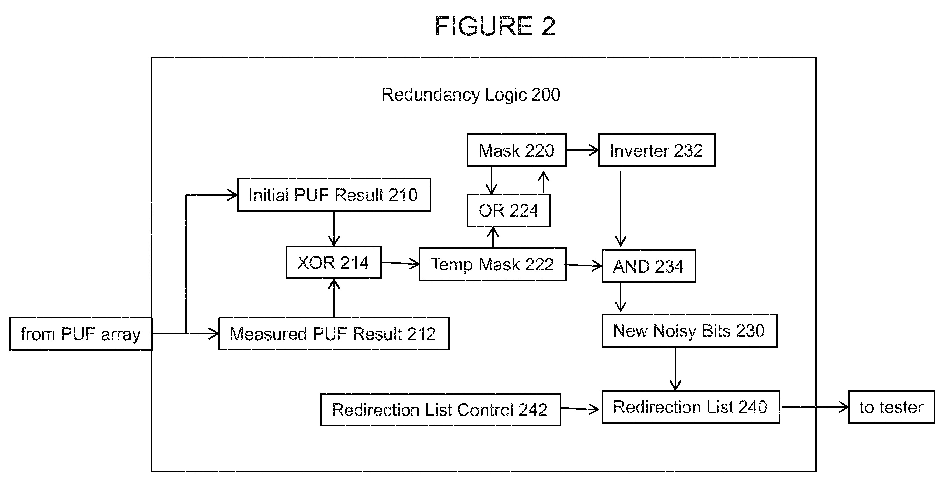

Figure 2 illustrates redundancy logic 200, an embodiment of which may be used within and/or represent redundancy logic 130 in IC 100 in Figure 1. Redundancy logic 200 provides for determining which bits of PUF cell array 120 to replace with redundant bits, without leaking PUF response value information to the tester. Redundancy logic 200 includes initial PUF result register 210, measured PUF result register 212, noisy bit mask register 220, temporary noisy bit mask register 222, new noisy bits register 230, redirection list register 240, bitwise exclusive-OR (XOR) gate 214, bitwise OR gate 224, inverter 232, and bitwise AND gate 234.

Although referred to as registers, initial PUF result register 210, measured PUF result register 212, noisy bit mask register 220, temporary noisy bit mask register 222, new noisy bits register 230, and redirection list register 240 may use any type of storage location in IC 100, such as register bits, cache bits, or other memory bits to store information. The number of bits or entries in each of these registers may be equal to the number of PUF cells in PUF cell array 120 to provide for a one-to-one mapping of a bit or entry in each of these registers to a PUF cell. Furthermore, any one or more of these registers may be shown simply for clarity or convenience in describing method embodiments of the present invention; they may or may not be physically present in various implementations of redundancy logic 200 according to various apparatus embodiments of the present invention.

Redundancy logic 200 also includes redirection list control logic 242, which may represent any microcode, firmware, circuitry, logic, structures, and/or other hardware to control the operation of redundancy logic 200 in the creation of a redundancy list according the a method embodiment of the present invention, such as method 300.

Redundancy logic 200 may be used according to a first method embodiment of the present invention, such as method 300, to create a redirection list to be stored in redirection list NVM 172, which may be used for noise reduction during the use of IC 100 according to a second method embodiment of the present invention, such as method 400. Prior to or as part of the first method embodiment of the present invention, the contents of noisy bit mask register 220 may be cleared by default or otherwise initialized to all zeroes, and each entry in redirection list 240 may be set by default or otherwise initialized to a value of negative one.

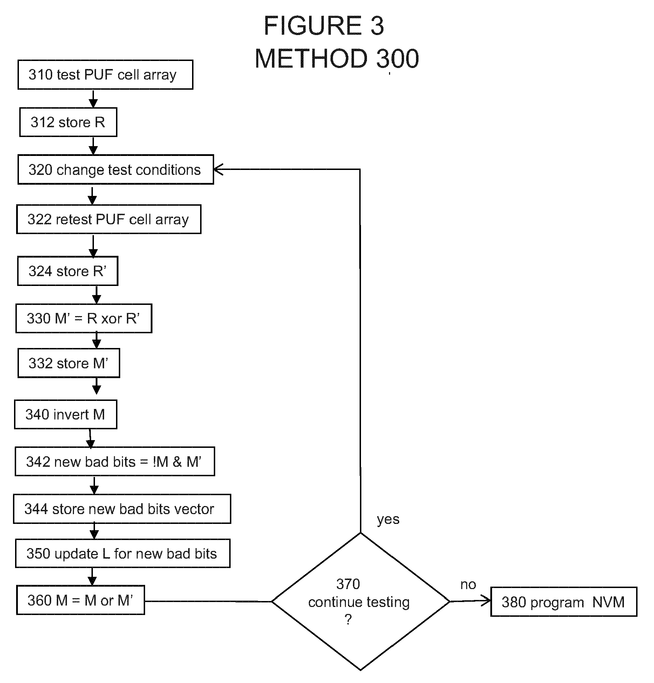

Figure 3 illustrates a method 300 of creating a redirection list according to an embodiment of the present invention, for example, during manufacturing time (as defined below). Although method embodiments of the present invention are not limited in this respect, reference may be made to elements of Figures 1 and 2 to help describe the method embodiment of Figure 3. Method 300 may include testing performed by the manufacturer or vendor of IC 100 as part of the fabrication and testing process (manufacturing time), before selling or releasing IC 100 to a customer. Method 300 may also include actions performed by the internal operation of IC 100.

In box 310 of method 300, PUF cell array 120 may be tested under an initial test condition to determine an initial raw PUF value (R). The initial test condition may include any particular operating voltage, operating temperature, and/or any other controllable operating or environmental condition. In box 312, the initial raw PUF value is stored in initial PUF result register 210.

In box 320, a test condition may be changed, for example, any one or more of the operating voltage, operating temperature, and/or other controllable operating or environmental condition may be changed. Box 320 may be omitted if it is desired to repeat the testing PUF cell array 120 under the same conditions.

In box 322, PUF cell array 120 may be tested under the new (or the same, if desired) test conditions to determine a new raw PUF value (R'). In box 324, the new raw PUF value is stored in measured PUF result register 212.

In box 330, the bitwise XOR of the initial raw PUF value, as stored in initial PUF result register 210, and the new raw PUF value, as stored in measured result register 212, is computed by bitwise XOR gate 214. In box 332, the output of XOR gate 214 may be stored (as M') in temporary noisy bit mask register 222 and may serve to indicate which PUF cells have changed their value between the initial measurement and the new measurement, and may therefore be considered bad.

In box 340, the noisy bit mask (M), as stored in noisy bit mask register 220, is inverted by inverter 232. In box 342, the bitwise AND of the inverted noisy bit mask and the temporary noisy bit mask, as stored in temporary noisy bit mask register 222, is computed by bitwise AND gate 234. In box 344, the output of bitwise AND gate 234 is stored in new noisy bits register 230 and may serve to indicate which PUF cells have been newly identified (i.e., based on the most recent iteration of testing PUF cell array 120) as bad.

In box 350, the content of redirection list register 240 (L) is updated by storing the address or other location identifier of a newly identified bad bit, as indicated by new noisy bits register 230, to a next available entry location in redirection list register 240. Box 350 is repeated for each newly identified bad bit. As further explained below in the second example of method 300, in the event that an unused redundant bit is identified as a bad bit, the content of redirection list register 240 is updated by storing the address of the newly identified bad redundant bit in its own entry location, even if there is another available entry location.

Furthermore, in a different embodiment of method 300, as explained below in the third example of method 300, the content of redirection list register 240 may be updated by storing the address of a newly identified bad bit only with the next available entry location corresponding to a redundant bit having the same initial value as the bad bit, so as to maintain the original PUF response value distribution.

In box 360, the bitwise OR of the noisy bit mask, as stored in noisy bit mask register 220, and the temporary noisy bit mask, as stored in temporary noisy bit mask register 222, is computed by bitwise OR gate 224, and fed back into noisy bit mask register 220. Therefore, noisy bit mask register 220 may accumulate a noisy bit mask over multiple testing conditions, i.e., indicate which PUF cells have been found to be noisy based on one or more iteration of testing.

In box 370, it is determined whether to repeat boxes 320 to 360, for example, based on a parameter chosen based on a desired or expected error rate limit, an allowable redundant bit limit (i.e., the number of redundant bits), the cost of testing, and/or any other factor.

In box 380, the output of redirection list register 240 may be used to program redirection list NVM 172, for example by the tester. Note that none of the content of initial PUF result register 210 or measured result register 212 or any other values used to generate the output of redirection list register 240 are revealed or leaked to the tester.

The operation of method 300 may be illustrated with the following three manufacturing time examples. For each example, assume that the size of main PUF array 122 is sixteen bits (to be referred to as bits b₀ through b₁₅) and the size of redundant PUF array 124 is four bits (to be referred to as bits b₁₆ through b₁₉); therefore, redirection list register 240 and redirection list NVM 172 each have four entries. Each entry has been initialized to negative one to indicate that the entry is available to be used. Each entry may be used to store the address or other location identifier of one of bits b₀ through b₁₉, which, for purposes of this description, will be referred to as the value 0 through the value 19, respectively. Redirection list register 240 will be referred to as L and its contents will be described as a bracketed ordered list, e.g., {-1, -1, -1, -1}, corresponding to redundant bits b₁₆ through b₁₉, respectively.

In a first manufacturing time example, each bad bit is to be replaced with any available redundant bit. In this example, a redundant bit is identified as a bad bit, and since it has already been used to replace another bad bit, it is itself replaced by another redundant bit.

By the first performance of box 330, bit b₃ is identified as a bad bit. Therefore, by the first performance of box 350, L is updated to {3, -1, -1, -1}, such that b₃ is to be replaced by b₁₆, the first currently available redundant bit. By the second performance of box 330, bit b₉ is identified as a bad bit. Therefore, by the second performance of box 350, L is updated to {3, 9, -1, -1}, such that b₉ is to be replaced by b₁₇, the first currently available redundant bit. By the third performance of box 330, bit b₁₇ is identified as a bad bit. Therefore, by the third performance of box 350, L is updated to {3, 9, 17, -1}, such that b₁₇ is to be replaced by b₁₈, the first currently available redundant bit.

Then, by the performance of box 380, {3, 9, 17, -1} is stored to redirection list NVM 172, such that during the use of IC 100 (as further explained below in the description of method 400), bit 3 is replaced by bit 16, and bit 9 is replaced by bit 18 (because bit 9 is replaced by bit 17 which is replaced by bit 18).

In a second manufacturing time example, each bad bit is to be replaced with any available redundant bit. The second example, like the first example, illustrates the identification of a redundant bit as a bad bit, but in this example, the redundant bit is identified as a bad bit before it has been used to replace another bad bit.

By the first performance of box 330, bit b₁₇ is identified as a bad bit. Therefore, by the first performance of box 350, L is updated to {-1, 17, -1, -1}, even though b₁₇ is not the first currently available redundant bit, so that b₁₇ will not be used to replace any other bit. By the second performance of box 330, bit b₃ is identified as a bad bit. Therefore, by the second performance of box 350, L is updated to {3, 17, -1, -1}, such that b₃ is to be replaced by b₁₆, the first currently available redundant bit. By the third performance of box 330, bit b₉ is identified as a bad bit. Therefore, by the third performance of box 350, L is updated to {3, 17, 9, -1}, such that b₉ is to be replaced by b₁₈, the first currently available redundant bit.

Then, by the performance of box 380, {3, 17, 9, -1} is stored to redirection list NVM 172, such that during the use of IC 100 (as further explained below in the description of method 400), bit 3 is replaced by bit 16, and bit 9 is replaced by bit 18 (and bit 17 is ignored).

In a third manufacturing time example, each bad bit is to be replaced only with any available redundant bit having the same value as the bad bit being replaced, in order to maintain the original PUF response value distribution.

By performance of box 310, the value of bit 3 is initially determined to be zero, the value of bit 9 is initially determined to be one, the value of bit 16 is initially determined to be one, the value of bit 17 is initially determined to be zero, the value of bit 18 is initially determined to be one, and the value of bit 19 is initially determined to be zero.

Then, by the first performance of box 330, bit b₃ is identified as a bad bit. Therefore, by the first performance of box 350, L is updated to {-1, 3, -1, -1}, such that b₃ is to be replaced by b₁₇, the first currently available redundant bit having the same initial value as bit 3. By the second performance of box 330, bit b₉ is identified as a bad bit. Therefore, by the second performance of box 350, L is updated to {9, 3, -1, -1}, such that b₉ is to be replaced by b₁₆, the first currently available redundant bit having the same initial value as bit 9. By the third performance of box 330, bit b₁₇ is identified as a bad bit. Therefore, by the third performance of box 350, L is updated to {9, 3, -1, 17}, such that b₁₇ is to be replaced by b₁₉, the first currently available redundant bit having the same initial value as bit 17.

Then, by the performance of box 380, {9, 3, -1, 17} is stored to redirection listNVM 172, such that during the use of IC 100 (as further explained below in the description of method 400), bit 3 is replaced by bit 19 (because bit 3 is replaced by bit 17 which is replaced by bit 19), and bit 9 is replaced by bit 16.

Although, for clarity and convenience, each of the three manufacturing time examples shows only one bad bit being identified per performance of boxes 320 through 360, any number of bad bits may be identified and box 350 may be performed for each.

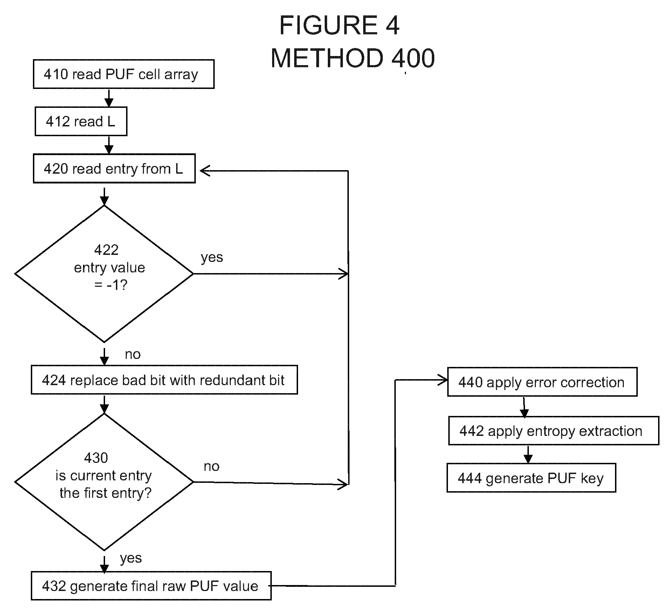

Figure 4 illustrates a method 400 of using a redirection list according to an embodiment of the present invention, for example, during evaluation time (as defined below). Although method embodiments of the present invention are not limited in this respect, reference may be made to elements of Figures 1 and 2 to help describe the method embodiment of Figure 4. Method 400 may include actions performed or in response to actions performed during the use of IC 100 (evaluation time), for example by a customer, including actions performed by the internal operation of IC 100.

In box 410 of method 400, PUF cell array 120 is read or evaluated to determine an initial raw PUF value. In box 412, a redirection list L is read from redirection list NVM 172.

In box 420 (starting from the last entry in L for the initial performance of box 420 and progressing towards the first entry in L with each subsequent performance), an entry is read from L. In box 422, it is determined whether the value of the current entry is negative one. If so, then method 400 returns to box 420. If not, then method 400 continues in box 424.

In box 424, the value of the redundant bit corresponding to the current entry is used to replace the value of the bit whose address or other indication of location is stored in the current entry, resulting in an updated raw PUF value.

In box 430, it is determined whether the current entry is the first entry in L. If so, then method 400 continues in box 432. If not, method 400 returns to box 420.

In box 432, a final raw PUF value is generated by using a first portion of the updated PUF value. For example, if the main PUF array has 128 bits, then the first 128 bits of the updated PUF value are used as the final raw PUF value. Therefore, any bad bits in the main array are replaced by redundant bits, such that the bad bits and any remaining redundant bits are not used in the final raw PUF value.

In box 440, the final raw PUF value may be processed by error correction logic 140. In box 442, the result from error correction logic 140 may be processed by entropy extraction logic 150. In box 444, the result from entropy extraction logic 160 may be used by PUF key generation logic 160 to generate a PUF key.

The operation of method 400 may be illustrated with the following evaluation time example. This example corresponds to the first manufacturing time example, so by the performance of box 412, L is {3, 9, 17, -1}.

Then, by the first performance of box 420, corresponding to redundant bit 19, the value of the current redirection list entry is -1. Therefore, by the first performance of box 422, method 400 returns to box 420.

By the second performance of box 420, corresponding to redundant bit 18, the value of the current redirection list entry is 17. Therefore, by the performance of box 424, the value of redundant bit 18 in the initial raw PUF value is used to replace the value of the bit 17, resulting in an updated raw PUF value.

By the third performance of box 420, corresponding to redundant bit 17, the value of the current redirection list entry is 9. Therefore, by another performance of box 424, the value of redundant bit 17 in the updated raw PUF value (i.e., the value of redundant bit 18 in the initial raw PUF value) is used to replace the value of bit 9, resulting in another updated raw PUF value.

By the fourth and final performance of box 420, corresponding to redundant bit 16, the value of the current redirection list entry is 3. Therefore, by another performance of box 424, the value of redundant bit 16 in the updated PUF value is used to replace the value of bit 3, resulting in another updated raw PUF value.

Then, by the performance of box 432, the first sixteen bits of the updated PUF value (i.e., b₀b₁b₂b₁₆b₄b₅b₆b₇b₈b₁₈b₁₀b₁₁b₁₂b₁₃b₁₄b₁₅) are used as the final raw PUF value.

In another evaluation time example corresponding to the third manufacturing time example, in which bad bits were replaced by redundant bits having the same initial value, it would be likely to see unused redundant bits between used redundant bits. Therefore, box 422 is used to skip the unused redundant bits during the backwards reading of the redirection list resulting from repeated performances of box 420.

In various embodiments of the present invention, the methods illustrated in Figures 3 and 4 may be performed in a different order, with illustrated boxes combined or omitted, with additional boxes added, or with a combination of reordered, combined, omitted, or additional boxes.

Other method embodiments of the present invention are also possible. For example, an embodiment may include a method of selecting redundant bits, based on their value, to replace bad bits (or even good bits) such that the final PUF value may be expected to have any desired ratio of ones to zeroes, such as a one-to-one ratio. Or, for example, and embodiment may include a method for the post-manufacturing (e.g., during customer use) identification and replacement of bad bits, for example, to counter device aging effects.

Thus, embodiments of an invention for using redundant bits to reduce PUF error rates have been described. While certain embodiments have been described, and shown in the accompanying drawings, it is to be understood that such embodiments are merely illustrative and not restrictive of the broad invention, and that this invention not be limited to the specific constructions and arrangements shown and described, since various other modifications may occur to those ordinarily skilled in the art upon studying this disclosure. In an area of technology such as this, where growth is fast and further advancements are not easily foreseen, the disclosed embodiments may be readily modifiable in arrangement and detail as facilitated by enabling technological advancements without departing from the principles of the present disclosure or the scope of the accompanying claims.

### CLAUSES

Clause 1. An integrated circuit comprising:
   a physically unclonable function (PUF) cell array to provide a raw PUF value, the PUF cell array including a plurality of redundant cells; and
   redundancy logic to generate a redirection list to be used to replace each of one or more bits of the raw PUF value with a redundant bit value from one of the redundant cells.
Clause 2. The integrated circuit of clause 1, further comprising a non-volatile memory in which to store the redirection list.
Clause 3. The integrated circuit of clause 1, wherein the redundancy logic includes:
   a first storage location to store a first raw PUF value;
   a second storage location to store a second raw PUF value; and
   a comparator to compare the first raw PUF value to the second raw PUF value and identify a PUF cell as a bad bit if the comparator determines that the first raw PUF value for the PUF cell is different from the second raw PUF value for the PUF cell.
Clause 4. The integrated circuit of clause 3, wherein the redundancy logic also includes a bad bit mask storage location to store a bad bit mask, wherein the comparator has a comparator output, the bad bit mask storage location has a bad bit mask input and a bad bit mask output, and the bad bit mask input is based on a bitwise logical OR operation on the comparator output and the bad bit mask output.
Clause 5. The integrated circuit of clause 3, wherein the redundancy logic also includes a new bad bits storage location to store a new bad bits vector be used to update the redirection list based on a result from the comparator.
Clause 6. The integrated circuit of clause 5, wherein the redundancy logic also includes a bad bit mask storage location to store a bad bit mask, wherein the comparator has a comparator output, and wherein the result from the comparator is based on a bitwise logical AND operation on the comparator output and an inverse of the bad bit mask.
Clause 7. A method comprising:
   testing a PUF cell array in an integrated circuit to measure a first raw PUF value;
   testing the PUF cell array to measure a second raw PUF value;
   comparing the first raw PUF value and the second raw PUF; and
   generating a redirection list based on the comparing, the redirection list to be used to replace each of one or more bits of the raw PUF value with a redundant bit value from one of a plurality of redundant cells in the PUF cell array.
Clause 8. The method of clause 7, wherein the redirection list is also based on a bad bit mask, further comprising generating a new bad bits vector based on the comparing and the bad bit mask, the new bad bits vector to be used in generating the redirection list.
Clause 9. The method of clause 8, wherein generating the new bad bits vector includes a bitwise logical AND operation on a result of the comparing and an inverse of the bad bit mask.
Clause 10. The method of clause 8, further comprising updating the bad bit mask based on a bitwise logical OR operation on the bad bit mask and the result of the comparing.
Clause 11. The method of clause 7, further comprising storing the redirection list in a non-volatile memory.
Clause 12. The method of clause 11, further comprising:
   reading an evaluation time raw PUF value from the PUF cell array;
   reading the redirection list from the non-volatile memory;
   using the redirection list to replace each of one or more bad bits of the evaluation time raw PUF value with a redundant bit; and
   generating a final evaluation time raw PUF value.
Clause 13. The method of clause 12, further comprising:
   applying error correction to the evaluation time raw PUF value; and
   applying entropy extraction to the evaluation time raw PUF value.
Clause 14. The method of clause 13, further comprising generating a cryptographic key from the evaluation time raw PUF value.
Clause 15. An apparatus comprising:
   an integrated circuit including:
      a physically unclonable function (PUF) cell array to provide a raw PUF value, the PUF cell array including a plurality of redundant cells; and
      redundancy logic to generate a redirection list to be used to replace each of one or more bits of the raw PUF value with a redundant bit value from one of the redundant cells; and
   an integrated circuit tester to test the PUF cell array;
   wherein the redundancy logic is to generate the redirection list without revealing the raw PUF value to the integrated circuit tester.

## Claims

1. An apparatus comprising:
an integrated circuit including:
a physically unclonable function (PUF) cell array to provide a raw PUF value, the PUF cell array including a plurality of redundant cells; and
redundancy logic to generate a redirection list to be used to replace each of one or more bits of the raw PUF value with a redundant bit value from one of the redundant cells; and
an integrated circuit tester to test the PUF cell array;
wherein the redundancy logic is to generate the redirection list without revealing the raw PUF value to the integrated circuit tester.
